# EUROPÄISCHE PATENTSCHRIFT

(11) **EP 2 564 459 B1**
(45) Veröffentlichungstag und Bekanntmachung des Hinweises auf die Patenterteilung: **13.11.2013**
(21) Anmeldenummer: 11711477.7
(22) Anmeldetag: 30.03.2011
(51) Int. Cl.: H01M 8/04

(54) **VERFAHREN ZUR REGELUNG DES ENERGIEMANAGEMENTS EINES BRENNSTOFFZELLENSYSTEMS**
CONTROL PROCESS FOR POWER MANAGEMENT IN A FUEL CELL SYSTEM
PROCÉDÉ DE GESTION DE PUISSANCE DANS UN SYSTÈME DE PILE À COMBUSTIBLE

(30) Priorität: 30.04.2010 DE 102010018907
(43) Veröffentlichungstag der Anmeldung: 06.03.2013
(73) Patentinhaber: Daimler AG, 70327 Stuttgart (DE)
(72) Erfinder: AUTENRIETH, Rainer, 72535 Heroldstatt (DE)
(74) Vertreter: JENSEN & SON
(86) Internationale Anmeldenummer: PCT/EP2011/001582
(87) Internationale Veröffentlichungsnummer: WO 2011/134580

(56) Entgegenhaltungen:
- EP-A1- 2 001 070
- WO-A1-2005/018979
- US-A- 5 631 532
- US-A1- 2002 162 694
- US-A1- 2003 194 586
- US-A1- 2004 033 398

## Beschreibung

Die Erfindung betrifft ein Verfahren zum Betreiben eines Brennstoffzellensystems zur Versorgung mindestens eines elektrischen Verbrauchers mit elektrischer Leistung nach dem Oberbegriff des Anspruchs 1. Des Weiteren betrifft die vorliegende Erfindung die Verwendung eines solchen Verfahrens in einem Kraftfahrzeug gemäß Anspruch 12.

Brennstoffzellen sind bereits seit langem bekannt und haben insbesondere im Bereich der Automobilindustrie in den letzten Jahren erheblich an Bedeutung gewonnen.

Brennstoffzellen erzeugen elektrische Energie auf chemischem Wege, wobei den Brennstoffzellen das Funktionsprinzip zu Grunde liegt, dass Moleküle und Ionen elektrochemisch miteinander reagieren und dadurch einen Elektronenfluss generieren. Die dabei abgegebenen Elektronen lassen sich dann als Strom durch einen Verbraucher leiten.

Eine Brennstoffzelle ist somit ein Energiewandler. Die Energie zur Stromproduktion wird der Brennstoffzelle durch Zuführung von Brennstoffen, wie z. B. Wasserstoff, zur Verfügung gestellt und durch eine chemische Reaktion des Brennstoffs mit einem Oxydationsmittel in elektrische Energie umgewandelt.

Für die Funktion der Brennstoffzelle ist es erforderlich, dass die einzelnen Ausgangsstoffe (Edukte) der Reaktion kontinuierlich zugeführt werden und das Reaktionsprodukt kontinuierlich abgeführt wird. Diese und ähnliche Aufgaben, wie z. B. die Luftversorgung der Katoden und Anoden, wird durch so genannte Nebenaggregate, zu denen beispielsweise Pumpen, Verdichter, Vakuumpumpen, Ventile und Regelgeräte gehören, gewährleistet. Die Brennstoffzelle und die zu ihrer Versorgung verwendeten Nebenaggregate werden als Brennstoffzellensystem bezeichnet.

Die Nebenaggregate sind oft ebenfalls elektrische Verbraucher. Dadurch, dass bei einer Verringerung der Leistung einer Brennstoffzelle, der Verbrauch der Nebenaggregate weniger stark abnimmt, als die von der Brennstoffzelle erzeugte Leistung, sinkt bei geringen Systemlasten der System-Wirkungsgrad eines Brennstoffzellensystems im Vergleich zum Brennstoffzellen-Wirkungsgrad. Dies führt zu einem erhöhten Brennstoffverbrauch bzw. in einem Kraftfahrzeug zu einem erhöhten Kraftstoffverbrauch, da die fehlende Energie durch einen Generator, z. B. die Lichtmaschine des Kraftfahrzeugs, zur Verfügung gestellt werden muss.

Um diesem Problem zu begegnen, sind im Stand der Technik verschiedene Ansätze bekannt. In der DE 102 61 418 A1 wird die Verschaltung einer Brennstoffzelle mit Batterie und Verbraucher beschrieben, wobei eine Verbesserung des Wirkungsgrades des Systems durch Hinzuschalten (Einschalten) und Wegschalten (Ausschalten) der Brennstoffzelle und der Batterie auf das Restsystem erreicht wird. Die DE 102 02 611 C1 beschreibt ein Verfahren, welches steuert, wie und in welcher Reihenfolge die Komponenten eines Brennstoffzellensystems miteinander verschaltet werden. Zu den Systembedingungen unter denen dieses geschieht, werden keine Ausführungen gemacht. Aus der DE 100 56 429 A 1 ist ebenfalls ein Ein- und Ausschalten der Brennstoffzelle bekannt. Hier erfolgt das Ein und Ausschalten nach Maßgabe der vorhandenen Versorgungsmedien - der durch das Brennstoffzellensystem erreichte Wirkungsgrad spielt keine Rolle. Ebenfalls als bekannt anzusehen ist der Ansatz, die Brennstoffzelle abzuschalten, wenn eine zuvor spezifizierte Betriebslast unterschritten wird. Diesem Ansatz liegt die Überlegung zu Grunde, dass bei einer geringen Betriebslast der Systemwirkungsgrad so gering ist, dass ein Abschalten der Brennstoffzelle sinnvoll ist.

Diese bekannten Lösungen weisen jedoch verschiedene Nachteile auf. Problematisch ist insbesondere, dass die Brennstoffzelle an einem statisch gewählten Abschaltpunkt ausgeschaltet wird. Die führt dazu, dass selbst dann, wenn die Nebenaggregate auf Grund von Betriebsbedingungen wie Fertigungsschwankungen oder Umgebungsbedingungen mehr Leistung benötigen als die Brennstoffzelle erzeugt, diese evtl. nicht abgeschaltet wird.

Die US 2003/194586 A1 und die US 2002/162694 A1 beschreiben jeweils gattungsgemäße Brennstoffzellensysteme. Als weiterer Stand der Technik zu dieser Thematik kann die EP 2 001 070 A1 genannt werden.

Aufgabe der Erfindung ist es, ein Verfahren zum Betreiben eines Brennstoffzellensystems zur Verfügung zu stellen das die realen Betriebsbedingungen einer Brennstoffzelle besser berücksichtigt.

Diese Aufgabe wird durch ein Verfahren gemäß Anspruch 1 sowie die Verwendung eines solchen Verfahrens in einem Kraftfahrzeug gemäß Anspruch 12 gelöst. Vorteilhafte Ausgestaltungen der Erfindung sind Gegenstand der Unteransprüche.

Ein erster Gedanke der Erfindung besteht darin, dass der Wirkungsgrad eines Brennstoffzellensystems ermittelt und die Brennstoffzelle unterhalb eines bestimmten Ausschalt-Grenzwirkungsgrades abgeschaltet wird. In einer bevorzugten Variante werden gleichzeitig die zum Abschaltzeitpunkt vorübergehend anliegende Betriebslast sowie verschiedene Systemzustände, wie zum Beispiel Temperatur und Druck, gespeichert. Die Brennstoffzelle wird mit Vorteil dann wieder eingeschaltet, wenn die Betriebslast unter Berücksichtigung der dann herrschenden Systemzustände einen Einschalt-Grenzlastwert übersteigt. Unter "vorübergehend" im Sinne der hier vorliegenden Erfindung ist ein temporäres Abschalten der Brennstoffzelle zu verstehen. Dies bedeutet, dass die Brennstoffzelle abgeschaltet wird, während das Brennstoffzellensystem selbst weiterhin in Betrieb ist oder zumindest in einem Zustand vorgehalten wird, indem dieses sehr schnell wieder in den Betrieb zurückwechseln kann. Die vorliegende Erfindung betrifft also nicht das endgültige Abschalten des Brennstoffzellensystems, sondern das Schalten des Brennstoffzellensystems in einen "Stand-by"-Zustand.

Zur Ermittlung des Wirkungsgrades des Brennstoffzellensystems kann vorteilhafter Weise die der Brennstoffzelle zugeführte Energie zu der Energie ins Verhältnis gesetzt werden, die durch das Brennstoffzellensystem als Nutzleistung zur Verfügung gestellt wird. Während die zugeführte Energie bekannt ist, kann die als Nutzleistung zur Verfügung gestellte Energie entweder direkt gemessen oder dadurch berechnet werden, dass der Energieverbrauch der Nebenaggregate bestimmt wird und von der, der Brennstoffzelle zugeführten Energie, abgezogen wird. Vorteilhafterweise erfolgt das Abschalten der Brennstoffzelle elektrisch, d.h. durch Trennung der Zelle vom Netz. Es ist allerdings ebenso möglich, die Brennstoffzelle in anderer Weise, zum Beispiel durch das Abstellen der Brennstoffzufuhr und somit durch ein Beenden der chemischen Reaktion abzuschalten.

Dabei ist es vorgesehen, dass das Brennstoffzellensystem eine Rezirkulation von Anodenabgasen um eine Anode der Brennstoffzelle mit einer Anodenrezirkulationsfördereinrichtung umfasst, wobei beim Ausschalten der Brennstoffzelle der durch die Anodenrezirkulationsfördereinrichtung geförderte Volumenstrom aufrechterhalten oder reduziert, nicht jedoch abgeschaltet wird. Da die Versorgung der Brennstoffzelle mit Wasserstoff oder einem vergleichbaren zur Verstromung in der Brennstoffzelle geeigneten Gas typischerweise relativ komplex ist, macht es beim vorübergehenden Ausschalten der Brennstoffzelle wenig Sinn, eine Anodenrezirkulationsfördereinrichtung gänzlich abzuschalten. Lediglich die Zufuhr von Wasserstoff kann abgeschaltet werden. Wenn das Gas in der Rezirkulationsfördereinrichtung weiterhin, typischerweise mit einem reduzierten Volumenstrom, bewegt wird, dann kann ein Wiederstart der Brennstoffzelle sehr viel schneller und effizienter realisiert werden, sobald der Einschalt-Betriebslastwert erreicht wird, da zumindest eine geringe Menge an Wasserstoff im gesamten Bereich der Anode vorliegt und unmittelbar mit der dann wieder zugeleiteten Luft auf der Kathodenseite elektrisch umgesetzt werden kann.

Vorteilhaft wird die Brennstoffzelle wieder eingeschaltet, wenn ein Einschalt-Betriebslastwert überschritten wird. Dazu kann zum Beispiel der Betriebslastwert gespeichert werden, bei welchem die Brennstoffzelle abgeschaltet wurde. Es ist jedoch ebenso denkbar, dass der Einschalt-Betriebslastwert statisch ist.

In einer weiteren bevorzugten Ausgestaltung ändern sich der Ausschalt-Grenzwirkungsgrad und/oder der Einschalt-Betriebslastwert in Abhängigkeit von Systemzuständen. Die Leistung einer Brennstoffzelle und somit auch der Wirkungsgrad eines Brennstoffzellensystems hängen von verschiedenen Systemzuständen, wie zum Beispiel Temperatur oder Druck, ab. Um möglichst optimale Grenzwerte zu verwenden, kann es daher sinnvoll sein, den Ausschalt-Grenzwirkungsgrad und/oder den Einschalt-Betriebslastwert den jeweils herrschenden Systemzuständen anzupassen. Dazu existiert dann ein Analysemittel, welches mit Hilfe von Sensor-, Betriebs- und Zustandsinformationen in der Lage ist, die relevanten Systemzustände zu erkennen. Vorzugsweise werden die Sensor-, Betriebs- und Zustandsinformationen durch so genanntes Polling (zyklisches Abfragen) erhalten. Gleichwertig ist aber die Verwendung von Interrupt-Requests (Unterbrechungsanforderungen) oder ein rekursiver Aufbau. Die Daten können dann in einer beliebigen Datenstruktur, zum Beispiel einem Feld (Array), einer Liste oder einem Baum, gespeichert werden. Vorteilhaft wird diese Datenstruktur direkt in dem jeweils verwendeten System, zum Beispiel einem Kraftfahrzeug, erstellt. Die Datensammlung würde dann desto größer werden, je länger das System in Betrieb ist. Dies hätte den Vorteil, dass die gespeicherten Daten von diesem individuellen System stammen und entsprechend genau sind. Es ist aber auch möglich, die Daten im Vorfeld für ein beispielhaftes Brennstoffzellensystem zu messen oder zu berechnen und als fertige Tabelle im System zu hinterlegen.

Vorteilhaft wird auch der Ladezustand des vorhandenen Energiespeichers beachtet. Beispielsweise können bei einer vergleichsweise geringen Batterieladung der Ausschalt-Grenzwirkungsgrad und/oder der Einschalt-Betriebslastwert abgesenkt werden.

In einer vorteilhaften Weiterbildung des erfindungsgemäßen Verfahrens ist es vorgesehen, dass sich der Ausschalt-Grenzwirkungsgrad und/oder der Einschalt-Betriebslastwert in Abhängigkeit eines Zustands des elektrischen Verbrauchers ändern. Die Anpassung der beiden Schaltschwellen für die Brennstoffzelle kann also nicht nur innerhalb des Brennstoffzellensystems erfolgen, sondern alternativ oder ergänzend dazu von außerhalb des Brennstoffzellensystems beeinflusst werden. Ein Beispiel hierfür wären entsprechende Betriebszustände des elektrischen Verbrauchers selbst, sodass entsprechend schnell auf Veränderungen beim elektrischen Verbraucher reagiert werden kann, um ergänzend zu der Ermittlung des Wirkungsgrads das Einschalten oder Abschalten der Brennstoffzelle zeitoptimiert zu realisieren.

In einer weiteren sehr günstigen Ausgestaltung des erfindungsgemäßen Verfahrens ist es außerdem vorgesehen, dass der elektrische Verbraucher als Elektromotor ausgebildet ist, wobei sich der Abschalt-Grenzwirkungsgrad und/oder der Einschalt-Betriebslastwert in Abhängigkeit eines Zustandes des durch den elektrischen Motor angetriebenen Systems ändern. Nicht nur der Elektromotor als elektrischer Verbraucher selbst, sondern ergänzend oder alternativ hierzu auch ein Kennwert des von diesem Elektromotor angetriebenen Systems kann zur Beeinflussung der beiden Schaltschwellen für die Brennstoffzelle genutzt werden. Damit kann sehr früh und effizient Kenntnis über die zukünftigen Anforderungen an die Brennstoffzelle erlangt werden, beispielsweise bei einem Kraftfahrzeug durch eine Auswertung aus einem Fahrzeugsteuergerät eines solchen. Damit lässt sich zusätzlich zur Wirkungsgradoptimierung ein Start/Stopp-System mit implementieren, welches relativ früh erkennt, dass die Brennstoffzelle in einen Bereich schlechteren Wirkungsgrads gelangen wird und ausgeschaltet werden kann, beispielsweise wenn die Geschwindigkeit des Kraftfahrzeugs auf Null reduziert wird, wie dies beispielsweise bei einem kurzfristigen Ampelstopp typisch ist. Ebenso kann sehr früh durch ein entsprechendes Absenken des Einschalt-Betriebslastwerts auf ein Anfahren reagiert werden, insbesondere indem beispielsweise ein Bremspedal losgelassen und/oder ein Gaspedal des Fahrzeugs betätigt wird. Das erfindungsgemäße Verfahren kann also in idealer Art und Weise durch ein an sich bekanntes Start/Stopp-System ergänzt oder zu einem solchen erweitert werden.

Vorzugsweise geschieht das Ausschalten der Brennstoffzelle durch eine elektrische Trennung der Brennstoffzelle vom Restsystem. Dazu kann beispielsweise eine Stelleinheit in Form eines MOSFET-Schalters mit Kondensator verwendet werden. Selbstverständlich ist auch die Verwendung jeder anderen Art von elektrischem Schalter möglich.

In einer weiteren bevorzugten Ausgestaltung wird beim Ausschalten der Brennstoffzelle auch das Nebenaggregat ausgeschaltet. Auch dies kann beispielsweise durch einen MOSFET-Schalter mit Kondensator oder einen beliebigen anderen elektrischen Schalter geschehen. Besonders vorteilhaft ist es, wenn zwischen dem Ausschalten der Brennstoffzelle und dem Ausschalten des Nebenaggregats ein zeitlicher Abstand besteht.

Vorteilhaft wird oberhalb eines vorher definierten System-Betriebslastwertes die Brennstoffzelle nicht ausgeschaltet. Auch dieser Wert kann entweder statisch sein oder sich aufgrund der jeweils herrschenden Systemzustände ändern.

Vorzugsweise wird bei abgeschalteter Brennstoffzelle der Verbraucher durch eine Energiespeichereinrichtung betrieben. Dazu enthält die Schalteinrichtung ein Analysemittel, welchem es mit Hilfe von Sensorinformationen möglich ist, zu erkennen, ob die Brennstoffzelle in Betrieb ist oder nicht. Bei der Energiespeichereinrichtung kann es sich um alle für eine Pufferung elektrischer Energie geeigneten Einrichtungen, insbesondere um eine (Blei-) Akkumulatorbatterie, handeln.

In einer vorteilhaften Weiterbildung des erfindungsgemäßen Verfahrens ist es vorgesehen, dass beim Ausschalten der Brennstoffzelle eine Luftversorgung für die Brennstoffzelle reduziert oder ausgeschaltet wird. Eine solche Luftversorgung stellt einen erheblichen elektrischen Nebenverbraucher dar, sodass durch ein Abschalten oder ein Reduzieren des Volumenstroms, welcher durch diese Luftversorgung erzeugt wird, ein erheblicher Effekt bei der Einsparung an Energie erzielt werden kann. Außerdem werden die Emissionen von Geräuschen deutlich reduziert. Je nach Typ der Fördereinrichtung einer solchen Luftversorgung kann es dabei sinnvoll sein, diese gänzlich auszuschalten oder lediglich zu reduzieren. Insbesondere bei der Verwendung eines Strömungsverdichters, welcher im Betrieb mit sehr hohen Drehzahlen in der Größenordnung von mehr als 50 000 U/min arbeitet, ist es sicherlich sinnvoll, die Drehzahl lediglich in der Leistung zu reduzieren, um so Energieverbrauch und Geräuschemissionen ebenfalls zu reduzieren. Ein Wiederanfahren aus einem Drehzahlbereich von Null wäre jedoch sehr aufwändig, sodass eine Reduktion auf ca. 10-12000 U/min ideal erscheint, um einen schnellen Wiederstart der Brennstoffzelle einerseits und eine Einsparung andererseits zu gewährleisten.

Schließlich betrifft die Erfindung die Verwendung des dargestellten Verfahrens in einem Kraftfahrzeug.

Im Folgenden werden einige beispielhafte Ausführungsformen der Erfindung anhand von Zeichnungen näher erläutert.

Dabei zeigen:
- Fig. 1: ein Blockschaltbild eines bevorzugten Aufbaus eines Brennstoffzellensystems,
- Fig. 2: ein Diagramm, welches den Wirkungsgradverlauf der Brennstoffzelle und den Wirkungsgradverlauf des Brennstoffzellensystems darstellt,
- Fig. 3: ein Flussdiagramm zur Darstellung einer bevorzugten Ausführungsform des erfindungsgemäßen Verfahrens, und
- Fig. 4: eine Prinzipdarstellung eines mit einem Brennstoffzellensystem ausgerüsteten Fahrzeugs.

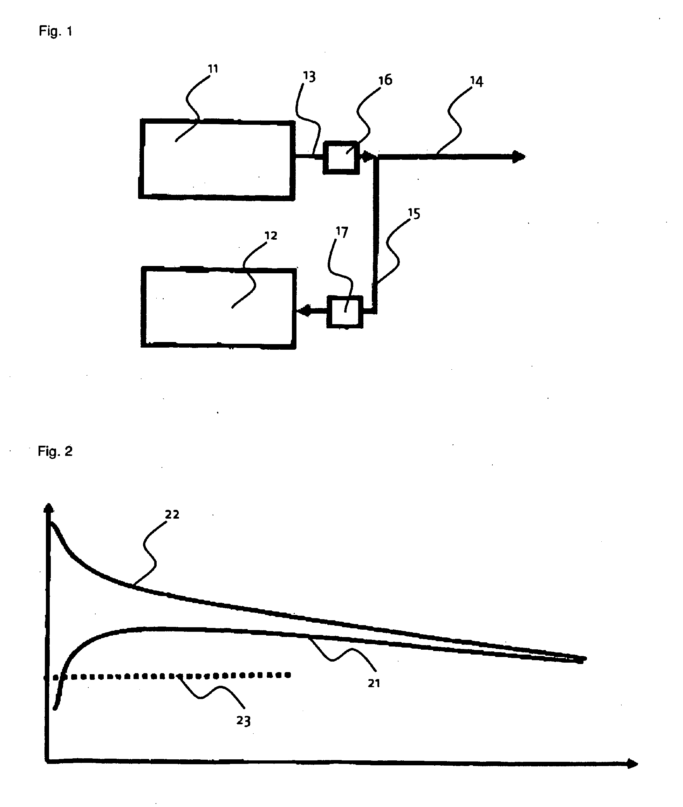

Figur 1 zeigt in Form eines Blockschaltbilds einen bevorzugten Aufbau eines Brennstoffzellensystems, dessen Bestandteile eine Brennstoffzelle (11), ein Nebenaggregat (12), sowie eine Brennstoffzellen-Stelleinheit (16) zum elektrischen Ein- und Ausschalten der Brennstoffzelle (11) und eine Nebenaggregat-Stelleinheit (17) zum Ein- und Ausschalten des Nebenaggregats (12) und somit insbesondere auch zum Ein- und Ausschalten der Brennstoffzelle (11) sind. Außerdem sind der von der Brennstoffzelle produzierte Brennstoffzellen-Strom (13), der vom Brennstoffzellensystem zur Verfügung gestellte Netto-Strom (14) und der vom Nebenaggregat (12) verbrauchte Strom (15) schematisch dargestellt.

Alle Bestandteile des Brennstoffzellensystems sind dabei elektrisch, zum Beispiel durch elektrische Leitungen, verbunden. Die Brennstoffzellen-Stelleinheit (16) ist zwischen die Brennstoffzelle und die anderen Bestandteile des Brennstoffzellensystems geschaltet, so dass sie die Brennstoffzelle (11) vom Restsystem trennen kann. Die Nebenaggregat-Stelleinheit (17) ist zwischen das Nebenaggregat und die anderen Bestandteile des Brennstoffzellesystems geschaltet, so dass sie das Nebenaggregat (12) vom Restsystem trennen kann. Sowohl die Brennstoffzellen-Stelleinheit (16), als auch die Nebenaggregat-Stelleinheit (17) können durch einen MOSFET-Schalter mit Kondensator oder einen beliebigen anderen elektrischen Schalter realisiert werden.

Es ist erkennbar, dass der Netto-Strom (14) sich aus der Differenz des von der Brennstoffzelle produzierten Brennstoffzellen-Stroms (13) und dem vom Nebenaggregat (12) verbrauchten Strom (15), darstellt.

Figur 2 zeigt in Form eines Diagramms den Brennstoffzellen-Wirkungsgradverlauf (22) sowie den Brennstoffzellensystem-Wirkungsgradverlauf (21). Die x-Achse des Diagramms stellt dabei den von der Brennstoffzelle (11) gelieferten Strom dar. Die y-Achse des Diagramms stellt den jeweiligen Wirkungsgrad dar. Außerdem ist ein Ausschalt-Grenzwirkungsgrad (23) dargestellt. Es ist zu erkennen, dass der Brennstoffzellensystem-Wirkungsgrad (21) desto geringer wird, je kleiner der durch die Brennstoffzelle (11) zur Verfügung gestellte Strom ist. Dies erklärt sich durch den größer werdenden Anteil des Stromverbrauchs der Nebenaggregate (12). Bei sehr geringen Lasten kann es sogar geschehen dass der Brennstoffzellensystem-Wirkungsgrad (21) unter 0 % Prozent absinkt.

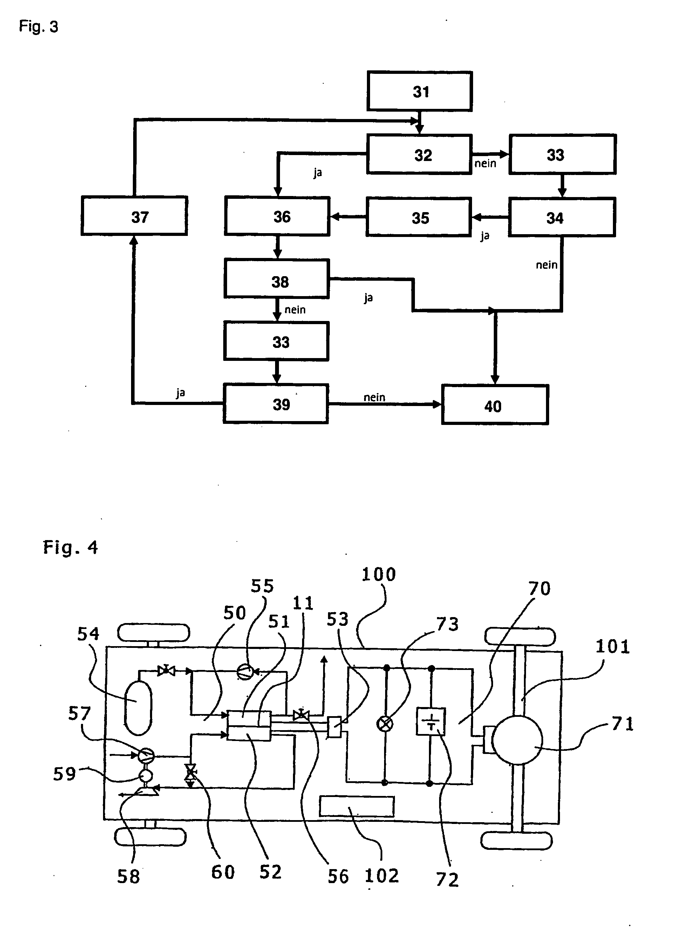

Das Flussdiagramm nach Figur 3 verdeutlicht eine bevorzugte Ausführungsform des Verfahrens zum Betrieb eines Brennstoffzellensystems. Dieses Flussdiagramm beginnt mit Start (31). Es folgte ein Block (32) in welchem analysiert wird, ob die Brennstoffzelle (11) eingeschaltet ist. Wenn die Brennstoffzelle eingeschaltet ist, folgt ein Block (36), in welchem der Wirkungsgrad des Brennstoffzellensystems gemessen wird. Im folgenden Block (38), wird analysiert, ob der Wirkungsgrad des Brennstoffzellensystems größer als der Ausschalt-Grenzwert ist. Wenn dies der Fall ist, wird im folgenden Block (33), die Betriebslast gemessen. Anschließend wird im folgenden Block (39) analysiert, ob die Betriebslast kleiner als der System-Betriebslastwert ist. Wenn dies der Fall ist, folgt ein Block (37) in welchem die Brennstoffzelle (11) ausgeschaltet wird. Sollte die Analyse im Block (39) ergeben haben, dass die Betriebslast größer als der System-Betriebslastwert ist, folgt unmittelbar das Ende (40) des Verfahrensablaufes. Gleiches gilt, sofern die Analyse im Block (38) ergeben sollte, dass der Wirkungsgrad des Brennstoffzellensystems kleiner als der Ausschalt-Grenzwert ist. Sofern die Analyse in Block (32) ergibt, dass die Brennstoffzelle (11) nicht eingeschaltet ist, folgt ein Block (33) in welchem die Betriebslast gemessen wird. Anschließend folgt ein Block (34), in welchem analysiert wird, ob die Betriebslast größer als der System-Betriebslastwert ist. Wenn dies der Fall ist, folgt ein Block (35), in welchem die Brennstoffzelle (11) eingeschaltet wird. Anschließend folgt der Block (36), in welchem der Wirkungsgrad des Brennstoffzellensystems gemessen wird. Andernfalls folgt wiederum das Ende (40) des Verfahrensablaufes: Dieser Verfahrensablauf wird iterativ verwendet.

In der Darstellung der Figur 4 ist nun beispielhaft ein prinzipmäßig angedeutetes Fahrzeug (100) zu erkennen, welches mit einem Brennstoffzellensystem (50) ausgerüstet sein soll. Neben dem Brennstoffzellensystem (50) weist das Fahrzeug (100) ein elektrisches Antriebssystem (70) auf, welches über einen Elektromotor (71) eine angetriebene Achse (101) des Fahrzeugs (100) antreibt. Neben dem Elektromotor (71) umfasst das elektrische Antriebssystem (70) außerdem eine Energiespeichereinrichtung (72), beispielsweise eine Lithium-lonen-Batterie, sowie gegebenenfalls weitere Verbraucher, welche durch den beispielhaft dargestellten Verbraucher (73) angedeutet sind. Die Steuerung des Fahrzeugs (100) selbst erfolgt über ein Fahrzeugsteuergerät (102) in an sich bekannter Art und Weise, sodass dieses ohne eine Vernetzung mit dem Fahrzeug (100) darzustellen, lediglich prinzipmäßig angedeutet ist.

Die Brennstoffzelle (11) besteht in an sich bekannter Weise aus einem Anodenbereich (51) und einem Kathodenbereich (52). Sie ist elektrisch über eine Stelleinheit (53), welche insbesondere die Brennstoffzellenstelleinheit (16) und die Nebenaggregatstelleinheit (17) mit umfassen soll, mit dem elektrischen Antriebssystem (70) verbunden. Dem Anodenbereich (51) der Brennstoffzelle (11) wird aus einem Wasserstoffspeicher (54), welcher insbesondere als Druckgasspeicher ausgebildet sein kann, Wasserstoff zugeführt. Der aus dem Anodenbereich (51) der Brennstoffzelle (11) abströmende Wasserstoff wird im Kreislauf über eine Rezirkulationsfördereinrichtung (55), vermischt mit frischem Wasserstoff aus der Wasserstoffspeichereinheit (54) zum Anodenbereich (51) zurückgeführt. Ein an sich bekanntes Ablassventil (56) ist außerdem vorgesehen, um von Zeit zu Zeit die sich im Anodenkreislauf ansammelnden inerten Gase und/oder Wasser in an sich bekannter Art und Weise abzulassen.

Der Kathodenbereich (52) wird über eine Luftfördereinrichtung (57) mit Luft als Sauerstofflieferant versorgt. Die Abluft aus dem Kathodenbereich (52) gelangt direkt - oder über einen zusätzlichen hier nicht dargestellten Brenner - in eine Turbine (58) und danach wieder an die Umgebung. Verbleibende thermische Energie und/oder Druckenergie in dem Abgas wird durch die Turbine (58) zumindest teilweise zurückgewonnen. Die Turbine (58) kann zusammen mit der Luftfördereinrichtung (57) sowie einer optionalen Elektromaschine (59) einen sogenannten elektrischen Turbolader (ETC) bilden. Der elektrische Turbolader nutzt die in den Abgasen verbliebene Energie zum Antreiben der Luftfördereinrichtung (57) und kann bei Bedarf zusätzlich Antriebsenergie über die elektrische Maschine (59) im motorischen Betrieb bereitstellen. Sollte die im Bereich der Abgase vorliegende Energie so groß sein, dass die Turbine (58) mehr Energie bereitstellt als die Luftfördereinrichtung (57) braucht, so kann die elektrische Maschine (59) außerdem im generatorischen Betrieb von der Turbine (58) angetrieben werden, um zusätzlich Strom zu erzeugen.

Das Abschalten der Brennstoffzelle (11) in dem hier dargestellten Brennstoffzellensystem (50) funktioniert nun so wie oben bereits beschrieben. Ergänzend hierzu kann es außerdem vorgesehen sein, dass über Zustandsgrößen des elektrischen Verbrauchers, und hier insbesondere des Elektromotors (71) sowie über Größen aus dem Fahrzeugsteuergerät (102), auf den Abschalt-Grenzwirkungsgrad (23) und den Einschalt-Betriebslastwert entsprechend Einfluss genommen wird. Dies bedeutet letztendlich, dass die oben beschriebene Funktionalität in einer Fahrzeuganwendung der Brennstoffzelle (11) um ein Start/Stopp-System erweitert werden kann. Kommt es zu einem vorübergehenden Stillstand des Fahrzeugs (100) beispielsweise an einer roten Ampel oder zu einer Fahrsituation, in welcher keine Antriebsenergie benötigt wird, beispielsweise zu einer Bergabfahrt, so kann dies anhand von Zustandsgrößen des Fahrzeugsteuergeräts (102) und/oder des elektrischen Motors (71), nämlich in dem ausgewertet wird, ob dieser motorisch oder generatorisch betrieben wird, erfasst werden. Die Abschaltung des Brennstoffzellensystems kann dann durch eine Anhebung des Ausschalt-Grenzwirkungsgrads (23) entsprechend beschleunigt werden, sodass das Brennstoffzellensystem (50) sehr viel schneller in einen Stand-by-Modus versetzt werden kann. In diesem Modus wird Energie eingespart und es werden Emissionen und Geräusche deutlich reduziert. Insbesondere kann hierfür die Luftfördereinrichtung (57) in ihrer Drehzahl deutlich reduziert werden. Beim Einsatz eines beschriebenen elektrischen Turboladers ist das gesamte Abschalten oft nicht sinnvoll, da ein Wiederanfahren vergleichsweise viel Zeit kostet. Typischerweise wird daher eine reduzierte Drehzahl in der Größenordnung von 10 bis 12 000 U/min gegenüber der Standarddrehzahl von mehr als 50 000 U/min bevorzugt. Um den Kathodenbereich (52) nicht mit der geforderten Restluft durchströmen zu müssen, kann außerdem ein optionales Systembypassventil (60) vorgesehen werden, über welches ein Kurzschluss zwischen der Eingangsleitung in den Kathodenbereich und der Ausgangsleitung aus demselben erreicht wird.

Zusätzlich wird die Wasserstoffversorgung aus dem Wasserstoffspeicher (54) abgestellt, da in der Brennstoffzelle (11), wenn diese elektrisch abgeschaltet ist, kein zusätzlicher Wasserstoff benötigt wird. Um die Gleichverteilung des Wasserstoffs im gesamten Anodenbereich (51) jedoch aufrechtzuerhalten, läuft die Rezirkulationsfördereinrichtung (55) typischerweise mit reduzierter Drehzahl weiter und wälzt im Anodenkreislauf bei geschlossenem und in diesem Zustand auch zwingend geschlossen gehaltenen Ablassventil (56) das Anodenabgas um. Bei einem Wiederstart des Systems, beispielsweise beim Anfahren an der Ampel, wird dann die benötigte Energie zuerst aus der Energiespeichereinrichtung (72) bereitgestellt, bis die Brennstoffzelle aus dem Stand-by-Modus wieder in den regulären Betriebsmodus zurückgeschaltet ist. All diesem ist selbstverständlich weiterhin die Wirkungsgradüberwachung der Brennstoffzelle überlagert, sodass die Brennstoffzelle (11) nicht eingeschaltet ist, wenn dies aufgrund des Wirkungsgrads nicht sinnvoll erscheint.

### Bezugszeichenliste

- 11: Brennstoffzelle
- 12: Nebenaggregat
- 13: Brennstoffzellen-Strom
- 14: Netto-Strom
- 15: vom Nebenaggregat verbrauchter Strom
- 16: Brennstoffzellen-Stelleinheit
- 17: Nebenaggregat-Stelleinheit

- 21: Brennstoffzellensystem-Wirkungsgradverlauf
- 22: Brennstoffzellen-Wirkungsgradverlauf
- 23: Ausschalt-Grenzwirkungsgrad

- 31: Start
- 32: Analyse der Brennstoffzelle
- 33: Messen der Betriebslast
- 34: Analyse der Betriebslast
- 35: Einschalten der Brennstoffzelle
- 36: Messen des System-Wirkungsgrades
- 37: Ausschalten der Brennstoffzelle
- 38: Analyse des System-Wirkungsgrades
- 39: Analyse der Betriebslast
- 40: Ende

- 50: Brennstoffzellensystem
- 51: Anodenbereich
- 52: Kathodenbereich
- 53: Stelleinheit
- 54: Wasserstoffspeicher
- 55: Rezirkulationsfördereinrichtung
- 56: Ablassventil
- 57: Luftfördereinrichtung
- 58: Turbine
- 59: elektrische Maschine
- 60: Systembypassventil

- 70: elektrisches Antriebssystem
- 71: elektrischer Motor
- 72: Energiespeichereinrichtung
- 73: weitere elektrische Verbraucher

- 100: Fahrzeug
- 101: angetriebene Achse
- 102: Fahrzeugsteuergerät

## Patentansprüche

1. Verfahren zum Betreiben eines Brennstoffzellensystems (50) zur Versorgung mindestens eines elektrischen Verbrauchers (71, 73) mit elektrischer Leistung, wobei das Brennstoffzellensystem (50) mindestens eine Brennstoffzelle (11) sowie mindestens ein Nebenaggregat (12, 57) zur Versorgung der Brennstoffzelle (11) umfasst, wobei der Wirkungsgrad (21) des Brennstoffzellensystems (50) bestimmt wird und die Brennstoffzelle (11) vorübergehend ausgeschaltet wird, wenn der Wirkungsgrad (21) des Brennstoffzellensystems (50) einen Ausschalt-Grenzwirkungsgrad (23) unterschreitet,
**dadurch gekennzeichnet, dass**
das Brennstoffzellensystem (50) eine Rezirkulation von Anodenabgasen um eine Anode (51) der Brennstoffzelle (11) mit einer Anodenrezirkulationsfördereinrichtung (55) umfasst, wobei beim Ausschalten der Brennstoffzelle (11) der durch die Anodenrezirkulationsfördereinrichtung (55) geförderte Volumenstrom aufrechterhalten oder reduziert, nicht jedoch abgeschaltet wird.

2. Verfahren gemäß Anspruch 1,
**dadurch gekennzeichnet, dass**
die Brennstoffzelle (11) wieder eingeschaltet wird, wenn ein Einschalt-Betriebslastwert überschritten wird.

3. Verfahren gemäß einem der Ansprüche 1 bis 2,
**dadurch gekennzeichnet, dass**
sich der Ausschalt-Grenzwirkungsgrad (23) und/oder der Einschalt-Betriebslastwert in Abhängigkeit von Systemzuständen ändern.

4. Verfahren gemäß einem der Ansprüche 1 bis 3,
**dadurch gekennzeichnet, dass**
sich der Ausschalt-Grenzwirkungsgrad (23) und/oder der Einschalt-Betriebslastwert in Abhängigkeit eines Zustandes des elektrischen Verbrauchers (71, 73) ändern.

5. Verfahren gemäß einem der Ansprüche 1 bis 4,
**dadurch gekennzeichnet, dass**
der elektrische Verbraucher als Elektromotor (71) ausgebildet ist, wobei sich der Ausschalt-Grenzwirkungsgrad (23) und/oder der Einschalt-Betriebslastwert in Abhängigkeit eines Zustandes des durch den elektrischen Motor (71) angetriebenen Systems (100) ändern.

6. Verfahren gemäß einem der Ansprüche 1 bis 5,
**dadurch gekennzeichnet, dass**
das Ausschalten der Brennstoffzelle (11) durch eine elektrische Trennung der Brennstoffzelle (11) vom Restsystem erfolgt.

7. Verfahren gemäß einem der Ansprüche 1 bis 6,
**dadurch gekennzeichnet, dass**
beim Ausschalten der Brennstoffzelle (11) das Nebenaggregat (12) ausgeschaltet wird.

8. Verfahren gemäß Anspruch 7,
**dadurch gekennzeichnet, dass**
zwischen dem Ausschalten der Brennstoffzelle (11) und dem Ausschalten des Nebenaggregats (12) ein zeitlicher Abstand besteht.

9. Verfahren gemäß einem der Ansprüche 1 bis 8,
**dadurch gekennzeichnet, dass**
beim Ausschalten der Brennstoffzelle (11) eine Luftversorgung für die Brennstoffzelle (11) reduziert oder ausgeschaltet wird.

10. Verfahren gemäß einem der Ansprüche 1 bis 9,
**dadurch gekennzeichnet, dass**
oberhalb eines System-Betriebslastwertes die Brennstoffzelle (11) nicht ausgeschaltet wird.

11. Verfahren gemäß einem der Ansprüche 1 bis 10,
**dadurch gekennzeichnet, dass**
bei abgeschalteter Brennstoffzelle (11) der Verbraucher (71, 73) durch eine Energiespeichereinrichtung (72) betrieben wird.

12. Verwendung eines Verfahrens nach einem der Ansprüche 1 bis 11 in einem Kraftfahrzeug (100).

## Claims

1. Method for operating a fuel cell system (50) for supplying electrical power to at least one electrical consumer (71, 73), the fuel cell system (50) comprising at least one fuel cell (11) and at least one subsidiary unit (12, 57) for supplying the fuel cell (11), wherein the efficiency level (21) of the fuel cell system (50) is determined and the fuel cell (11) is temporarily disconnected if the efficiency level (21) of the fuel cell system (50) falls below an efficiency level disconnection threshold (23),
**characterised in that**
the fuel cell system (50) comprises a recirculation of anode waste gases around an anode (51) of the fuel cell (11) with an anode recirculation support unit (55), wherein upon disconnection of the fuel cell (11) the volume flow supported by the anode recirculation support unit (55) is maintained or reduced but not shut off.

2. Method according to claim 1,
**characterised in that**
the fuel cell (11) is re-connected if a connection operating load value is exceeded.

3. Method according to one of the claims 1 to 2,
**characterised in that**
the efficiency level disconnection threshold (23) and / or the connection operating load value change in dependence upon system states.

4. Method according to one of the claims 1 to 3,
**characterised in that**
the efficiency level disconnection threshold (23) and / or the connection operating load value change in dependence upon a state of the electrical consumer (71, 73).

5. Method according to one of the claims 1 to 4,
**characterised in that**
the electrical consumer is an electric motor (71), wherein the efficiency level disconnection threshold (23) and / or the connection operating load value change in dependence upon a state of the system (100) driven by the electric motor (71).

6. Method according to one of the claims 1 to 5,
**characterised in that**
the disconnection of the fuel cell (11) is realised through an electrical separation of the fuel cell (11) from the rest of the system.

7. Method according to one of the claims 1 to 6,
**characterised in that**
when the fuel cell (11) is disconnected the subsidiary unit (12) is disconnected.

8. Method according to claim 7,
**characterised in that**
there is a time lag between the disconnection of the fuel cell (11) and the disconnection of the subsidiary unit (12).

9. Method according to one of the claims 1 to 8,
**characterised in that**
when the fuel cell (11) is disconnected an air supply for the fuel cell (11) is reduced or shut off.

10. Method according to one of the claims 1 to 9,
**characterised in that**
the fuel cell (11) is not disconnected above a system operating load value.

11. Method according to one of the claims 1 to 10,
**characterised in that**
when the fuel cell (11) is disconnected the consumer (71, 73) is operated by an energy storage unit (72).

12. Use of a method according to one of the claims 1 to 11 in a motor vehicle (100).

## Revendications

1. Procédé de fonctionnement d'un système à piles à combustible (50) destiné à alimenter au moins un consommateur électrique (71, 73) en énergie électrique, le système à piles à combustible (50) comprenant au moins une cellule de pile à combustible et au moins un groupe auxiliaire (12, 57) destiné à alimenter la cellule de pile à combustible (11), l'efficacité (21) du système à piles à combustible (50) étant déterminée et la cellule de pile à combustible (11) étant temporairement arrêtée lorsque le rendement (21) du système à piles à combustible (50) tombe au-dessous d'un degré de rendement limite de coupure (23),
**caractérisé en ce que** le système à piles à combustibles (50) comprend une recirculation des gaz de l'anode autour d'une anode (51) de la cellule de pile à combustible (11) à l'aide d'un dispositif de transport de recirculation d'anode (55), lors de l'arrêt de la cellule de pile à combustible (11), le flux volumétrique transporté par le dispositif de transport de recirculation d'anode (55) étant réduit ou maintenu mais n'est pas arrêté.

2. Procédé selon la revendication 1, **caractérisé en ce que**
la cellule de pile à combustible (11) est remise en fonctionnement lorsqu'une valeur de charge de démarrage est dépassée vers le haut.

3. Procédé selon l'une quelconque des revendications 1 à 2, **caractérisé en ce que**
le degré de rendement de limite de coupure (23) et/ou la valeur de charge de démarrage est modifié(e) en fonction des états du systèmes.

4. Procédé selon l'une quelconque des revendications 1 à 3, **caractérisé en ce que**
le degré de rendement de limite de coupure (23) et/ou la valeur de charge de démarrage est modifié(e) en fonction d'un état du consommateur électrique (71, 73).

5. Procédé selon l'une quelconque des revendications 1 à 4, **caractérisé en ce que**
le consommateur électrique est conçu comme un moteur électrique (71), le degré de rendement de limite de coupure (23) et/ou la valeur de charge de démarrage étant modifié(e) en fonction d'un état du système (100) entraîné par le moteur électrique (71).

6. Procédé selon l'une quelconque des revendications 1 à 5, **caractérisé en ce que**
l'arrêt de la cellule de pile à combustible (11) est effectué par une séparation électrique de la cellule de pile à combustible (11) du reste du système.

7. Procédé selon l'une quelconque des revendications 1 à 6, **caractérisé en ce que**
lors de l'arrêt de la cellule de pile à combustible (11) le groupe auxiliaire (12) est arrêté.

8. Procédé selon la revendication 7, **caractérisé en ce qu'**
il existe un intervalle temporel entre l'arrêt de la cellule de pile à combustible (11) et l'arrêt du groupe auxiliaire (12).

9. Procédé selon l'une quelconque des revendications 1 à 8, **caractérisé en ce que**
lors de l'arrêt de la cellule de pile à combustible (11), une alimentation en air pour la cellule de pile à combustible (11) est réduite ou arrêtée.

10. Procédé selon l'une quelconque des revendications 1 à 9, **caractérisé en ce que** en dehors de la valeur de charge de fonctionnement de système la cellule de pile à combustible (11) est arrêtée.

11. Procédé selon l'une quelconque des revendications 1 à 10, **caractérisé en ce que** lorsque la cellule de pile à combustible (11) est arrêtée, un dispositif accumulateur d'énergie (72) fait fonctionner le consommateur (71, 73).

12. Utilisation d'un procédé selon l'une quelconque des revendications 1 à 11 dans un véhicule à moteur (100).
